# EUROPÄISCHE PATENTSCHRIFT

(11) **EP 3 481 649 B1**
(45) Veröffentlichungstag und Bekanntmachung des Hinweises auf die Patenterteilung: **09.12.2020**
(21) Anmeldenummer: 17720781.8
(22) Anmeldetag: 02.05.2017
(51) Int. Cl.: B60C 11/16

(54) **FAHRZEUGREIFEN UND SPIKES**
VEHICLE TYRE
PNEUMATIQUE DE VÉHICULE

(30) Priorität: 06.07.2016 DE 102016212280
(43) Veröffentlichungstag der Anmeldung: 15.05.2019
(73) Patentinhaber: Continental Reifen Deutschland GmbH, 30165 Hannover (DE)
(72) Erfinder: SCHLITTENHARD, Jan, 30900 Wedemark (DE); BERGER, Christoph, 30173 Hannover (DE); KÖTTER, Maik, 30451 Hannover (DE); SPECHTMEYER, Torben, 30451 Hannover (DE)
(74) Vertreter: Finger, Karsten
(86) Internationale Anmeldenummer: PCT/EP2017/060320
(87) Internationale Veröffentlichungsnummer: WO 2018/007039

(56) Entgegenhaltungen:
- EP-A2- 0 864 449
- WO-A1-2016/080454
- FI-B- 126 308
- JP-A- 2013 067 192

## Beschreibung

Die Erfindung betrifft einen Fahrzeugreifen mit Laufstreifenprofil und Spikes, welche mit einer Spikespitze mit umlaufender Griffkante ausgebildet sind, mit zwei axial seitlich Erstreckungsabschnitten des Laufstreifenprofils, in welchen jeweils ausschließlich erste Spikes ausgebildet sind, und mit einem zwischen den beiden seitlichen Erstreckungsabschnitten ausgebildeten axial mittleren Erstreckungsabschnitt des Laufstreifenprofils, in welchem ausschließlich zweite Spikes ausgebildet sind, wobei die Spikespitze der zweiten Spikes mit dem Konturverlauf ihrer Griffkante symmetrisch zu einer Achse ausgebildet ist, welche unter Einschluss eines Winkels β zur Umfangsrichtung U mit 0°≤ β ≤ 20° ausgerichtet ist, wobei die Spikespitze der ersten Spikes mit dem Konturverlauf ihrer Griffkante symmetrisch zu einer ersten Achse ausgebildet ist, welche unter Einschluss eines Winkels α zur axialen Richtung A mit 0°≤ α ≤ 35° ausgerichtet ist.

Derartige Fahrzeugreifen sind bekannt.

Üblicherweise werden derartige Fahrzeugreifen über ihre gesamte Erstreckung in axialer Richtung und in Umfangsrichtung jeweils mit gleichen, einheitlich ausgebildeten und ausgerichteten Spikes ausgebildet. Diese sind dabei üblicher Weise zur Übertragung von Umfangskräften und somit für Traktion und Bremsen optimiert. Die Ausbildung der Seitenführung durch Spikes wird demgegenüber untergeordnet. Die hierzu verwendeten Spikes sind üblicher Weise in ihrer umlaufenden Griffkante symmetrisch zur axialen Richtung des Reifens ausgebildet. Es ist auch bekannt, alle derartig ausgebildeten Spikes im Laufstreifenprofil mit einer von der axialen Richtung abweichenden Orientierung ihrer Symmetrieachse auszurichten, um auf diese Weise den Nachteil in der Seitenführung etwas auszugleichen. Die durch die Spikes im Fahrzeugreifen erzeugte Traktions- und Bremsperformance wird hierdurch jedoch reduziert.

Es ist wünschenswert zur Erzielung eines optimalen Griffs von Reifen auf Eis und Schnee auch bei Spikereifen mit Hilfe der Spikes sowohl Traktions- und Bremsperformanceeigenschaften als auch Seitenführungseigenschaften auf ein hohes Niveau zu bringen.

Moderne Reifen sind häufig im Schulterabschnitt mit kleinerer Profiltiefe als in ihrer Mitte ausgebildet, um auf diese Weise Vorteile hinsichtlich des Rollwiderstandes zu ermöglichen. Hierzu sollte entsprechend der unterschiedlichen Tiefenverteilung des Profils auch die Spikelänge dieser Tiefenverteilung angepasst und somit in der Schulter kürzer ausgebildet werden als im Mittenabschnitt. Bei den bekannten Reifen, bei denen die Spikes mit gleicher Form ausgebildet werden, birgt dies die Verwechslungsgefahr bei der Montage und erfordert somit einen sehr hohen Aufwand bei der richtigen Zuordnung der Spikes an die entsprechenden Reifenabschnitte bei der Montage. Eine Falschpositionierung von Spikes kann zumindest zu schnellem Verlust der Spikes und somit zur eingeschränkten Nutzbarkeit der Spikeeffekte führen.

Aus der WO 2014/148262 A1 ist es bekannt, in einem Fahrzeugluftreifen jeweils den gleichen Spike um 180° verdreht anzuordnen. Die oben beschriebenen Probleme hinsichtlich des Zielkonfliktes Traktions- und Bremsperformance einerseits und Seitenführung andererseits sowie der sicheren Montage bei modernen für Rollwiderstand optimierten Reifen bestehen auch bei den aus der WO 2014/148262 A1 bekannten Reifen.

Aus der EP 11 99 193 A1 ist bekannt, über der gesamten Reifenprofilbreite hinweg in ihrer Form im Wesentlichen gleiche Spikes anzuordnen, wobei die Spikes sowohl in ihrem Spikeoberflansch, als auch an ihrer Spikespitze und am Spikefuß jeweils ovalförmig und somit in allen senkrecht zur Spikelängsachse ausgebildeten Ebenen jeweils mit zwei Symmetrieachsen ausgebildet sind. Dabei ist es auch bekannt, dass Oval des Oberflansches und der Spikespitze bei den in den Reifenschultern eingesetzten Spikes gegenüber ihrem Oval des Fußflansches mit einem geringfügig anderen Winkel versetzt auszubilden als bei denjenigen Spikes, die im zentralen Abschnitt des Laufstreifenprofils eingesetzt werden. Durch die Verdrehung der in den Reifenschultern ausgebildeten Spikes gegenüber den zentral angeordneten Spikes können zwar Seitenkräfte besser übertragen werden. Die in ihren ovalen Formen mit doppelter Symmetrieachse ausgebildeten Spikes sowohl im zentralen Abschnitt als auch im Schulterabschnitt führen aber aufgrund der Doppelsymmetrie im Schulterabschnitt sowohl zu relativ hohem Gewicht der Spikes im Bereich der Reifenschulter als auch zur leichten Verwechselbarkeit der beiden fast gleichen Spiketypen. Die doppelte Symmetrie und das damit bedingte relativ hohe Gewicht der Spikes im Reifenschulterabschnitt bedingen leichten Verlust der Spikes im Reifenschulterabschnitt, bei den dort besonders hohen seitlichen Kräften und eine erhöhte Straßenbelastung. Um die durch hohes Gewicht bedingten Effekte zu vermeiden, können bei diesem Reifen daher nur Spikes mit sehr kleinen Formen, insbesondere der Griffkanten umgesetzt werden. Hierdurch werden die Möglichkeiten der Seitenkraftübertragung bei guter Brems- uns Traktionskraftübertragung jedoch wieder beschränkt.

**Aus der** JP 2013 -67192 A **ist es bekannt, in einem Laufstreifenprofil Spikes auszubilden, deren Spikespitze mit gleicher Form jedoch mit unterschiedlicher Größe ausgebildet ist.**

**Aus der** EP 0864449 A2 **ist es bekannt, in Profilelementen lamellenförmige Elemente mit unterschiedlicher Ausrichtung auszubilden.**

**Aus der** WO 2016/080454 A1 **ist es bekannt, Spikes mit lamellenförmigen geradlinig erstreckten Spikespitzen unter Einschluss eines Neigungswinkels zur axialen Richtung auszubilden.**

Aus den FI 126 308 B, FI 20 146 169 A und RU 2015 154093 A ist es bekannt, in einem Laufstreifen Spikes derart anzuordnen, dass in der Laufstreifenmitte die Griffkanten eine andere Form besitzen als in den seitlichen Erstreckungsbereichen des Laufstreifen.

Der Erfindung liegt daher die Aufgabe zugrunde, Fahrzeugluftreifen mit Spikes mit einer verbesserten Lösung des Zielkonfliktes für gute Seitenführung einerseits und gute Traktions- und Bremsperformance andererseits auch bei Nutzung der modernen für Rollwiderstand optimierten Reifenformen und bei sicherer Montage und hoher Haltbarkeit der Spikes im Reifen zu ermöglichen.

Die Aufgabe wird erfindungsgemäß durch die Ausbildung eines Fahrzeugreifens mit Laufstreifenprofil und Spikes, welche mit einer Spikespitze mit umlaufender Griffkante ausgebildet sind, mit zwei axial seitlichen Erstreckungsabschnitten des Laufstreifenprofils, in welchen jeweils ausschließlich erste Spikes ausgebildet sind, und mit einem zwischen den beiden seitlichen Erstreckungsabschnitten ausgebildeten axial mittleren Erstreckungsabschnitt des Laufstreifenprofils, in welchem ausschließlich zweite Spikes ausgebildet sind, wobei die Spikespitze der zweiten Spikes mit dem Konturverlauf ihrer Griffkante symmetrisch zu einer Achse ausgebildet ist, welche unter Einschluss eines Winkels β zur Umfangsrichtung U mit 0°≤ β ≤20° ausgerichtet ist, wobei die Spikespitze der ersten Spikes mit dem Konturverlauf ihrer Griffkante symmetrisch zu einer ersten Achse ausgebildet ist, welche unter Einschluss eines Winkels α zur axialen Richtung A mit 0°≤ α ≤35° ausgerichtet ist, gemäß den Merkmalen von Anspruch 1 gelöst, bei dem der Konturverlauf der Griffkante der ersten Spikes eine andere Form als der Konturverlauf der Griffkante der zweiten Spikes aufweist, und bei dem die Spikespitze der ersten Spikes mit dem Konturverlauf ihrer Griffkante jeweils asymmetrisch zu den Ebenen ausgebildet ist, welche senkrecht zu ihrer ersten Achse (m) stehen, wobei die Länge (f) der in axialer Richtung gebildeten Projektion der Griffkante der ersten Spikes jeweils größer ist als die Länge (e) der in axialer Richtung A gebildeten Projektion der Griffkante der zweiten Spikes.

Durch diese Ausbildung wird es ermöglicht, dass der Reifen in den für die Übertragung der Seitenkräfte besonders wichtigen axial äußeren Erstreckungsabschnitten eines Laufstreifenprofils mit zur Seitenkraftübertragung optimierten Spikes und in dem für Traktion und Bremsen besonders wichtigen mittleren Erstreckungsabschnitt mit zur Übertragung von Brems- und Traktionskräften optimierten Spikes ausgebildet wird. Die Ausbildung der ersten Spikes mit ihrem Griffkantenverlauf mit nur einer Symmetrieachse ermöglicht es zur Übertragung von Seitenkräften wichtige, besonders wirksame Griffkanten gerade im Schulterbereich bereit zu stellen. Die unterschiedliche Form der umlaufenden Griffkanten der ersten und der zweiten Spikes ermöglicht dabei eine sichere einfache Unterscheidung der Spikes, wodurch in einfacher Weise die Montage verwechslungssicher umgesetzt werden kann. Durch die Ausbildung können somit auch bei modernen rollwiderstandsoptimierten Reifen einfach und zuverlässig die jeweils erforderlichen Spikes sicher und zuverlässig montiert werden, wodurch der Einsatz von Spikes bei rollwiderstandsarmen modernen Reifen sicherer ermöglicht werden kann.

Besonders vorteilhaft ist die Ausbildung eines Fahrzeugreifens gemäß den Merkmalen von Anspruch 2, wobei die senkrecht zur ersten Achse (m) der Griffkante des ersten Spikes gemessene Breite der vom Konturverlauf der Griffkante umschlossenen Fläche längs der Erstreckung der ersten Achse (m) zu der vom mittleren Erstreckungsabschnitt des Laufstreifenprofils wegweisenden Seite hin - insbesondere stetig - zunimmt. Dies ermöglicht eine weitere Verbesserung der Seitenkraftübertragung durch die zusätzliche Optimierung der Griffkanten im Bereich der Reifenschulter.

Besonders vorteilhaft ist die Ausbildung eines Fahrzeugreifens gemäß den Merkmalen von Anspruch 3, wobei der Konturverlauf der Griffkante der ersten Spikes beiderseits der ersten Achse jeweils einen geradlinigen Erstreckungsabschnitt aufweist, wobei die geradlinigen Erstreckungsabschnitte zumindest in ihrer Verlängerung sich auf der zur mittleren Erstreckungsabschnitt des Laufstreifenprofils hinweisenden Seite der Griffkante in der ersten Achse schneiden und von diesem Schnittpunkt ausgehend längs der Erstreckung der ersten Achse zu der vom mittleren Erstreckungsabschnitt des Laufstreifenprofils wegweisenden Seite hin bis zu ihrem Erstreckungsende unter Einschluss eines Winkels V-förmig verlaufen, wobei die beiden Erstreckungsenden durch einen im Wesentlichen senkrecht zur ersten Achse erstreckten dritten Erstreckungsabschnitt der Griffkante mit einander verbunden sind. Der Konturverlauf ermöglicht eine besonders material- und gewichtssparende und somit straßenschonende und verlustsichere Ausbildung der im Schulterbereich eingesetzten Spikes und dabei dennoch eine gerade im Schulterbereich besonders wichtige große, für die Übertragung von Seitenkräften wirksame Griffkantenlänge speziell zur axialen Außenseite des Reifens hin.

Besonders vorteilhaft ist die Ausbildung eines Fahrzeugreifens gemäß den Merkmalen von Anspruch 4, wobei der dritte Erstreckungsabschnitt geradlinig oder konkav gekrümmt erstreckt ausgebildet ist. Die gradlinige Ausbildung ermöglicht eine besonders einfache Ausführung des Werkzeugs für die Herstellung der Spikepins. Die konkave Ausbildung ermöglicht eine weitere Gewichtsreduzierung des Spikepins, welche je nach gewünschtem Anforderungsprofil in reduziertem Straßenabrieb durch geringeres Gewicht oder bei gleichbleibender Straßenabnutzung durch Materialumverteilung in eine Verlängerung des dritten Erstreckungsabschnittes und damit in eine erhöhte Seitenführung umgewandelt werden kann.

Besonders vorteilhaft ist die Ausbildung eines Fahrzeugreifens gemäß den Merkmalen von Anspruch 5, wobei die ersten und/oder die zweiten Spikes jeweils aus einem Spikekörper und einem Spikepin bestehen, bei dem im Spikepin die Spikespitze und bei dem der Spikekörper aus einem Fuß flansch, einem Mittenabschnitt und einem Oberflansch ausgebildet ist. Dies ermöglicht eine optimale Umsetzung eines Spikes mit abriebsoptimiertem Spikepin einerseits und hinsichtlich der Haltekräfte und Bettungssteifigkeit optimiertem Spikekörper andererseits zur Erzielung der gewünschten Spike-Eigenschaften.

Besonders vorteilhaft ist die Ausbildung eines Fahrzeugreifens gemäß den Merkmalen von Anspruch 6, wobei der Fußflansch der ersten Spikes jeweils in den senkrecht zur Längserstreckungsrichtung des ersten Spikes ausgebildeten Schnittebenen mit einer kreissegmentförmigen, mit ovalsegmentförmigen oder mit ellipsensegmentförmigen Schnittkontur ausgebildet ist, deren Segmentenden mit einem geradlinig erstreckten Abschnitt verbunden sind, wobei dieser geradlinige Abschnitt senkrecht zu einer Symmetrieachse der Kreisform bzw. senkrecht zur längeren Symmetrieachse der Ovals bzw. der Ellipse ausgerichtet ist, und wobei diese Symmetrieachse unter Einschluss eines Winkels γ mit 0°≤γ≤45° zur axialen Richtung A des Reifens ausgerichtet ist.

Besonders vorteilhaft ist die Ausbildung eines Fahrzeugreifens gemäß den Merkmalen von Anspruch 7, wobei der Oberflansch und der Mittenabschnitt in den senkrecht zur Längserstreckungsrichtung des ersten und/oder zweiten Spikes ausgebildeten Schnittebenen jeweils mit runder, ovaler oder elliptischer Schnittkontur ausgebildet sind. Diese Ausbildung hat sich als besonders vorteilhaft für die Dauerhaltbarkeit der Spikeeinbettung erwiesen, weil bei diesen Formen keine Spannungsspitzen in der umliegenden Gummimatrix induziert werden. Spannungsspitzen in der Gummimatrix durch kantige Formen können zur Reduktion von Haltekräften durch stärkere Kriechprozesse im Gummi und Rissen im Gummi induzieren, wodurch langfristig zum der Verlust des Spikes begünstigen würde.

Besonders vorteilhaft ist die Ausbildung eines Fahrzeugreifens gemäß den Merkmalen von Anspruch 8, wobei der Konturverlauf der umlaufenden Griffkante der zweiten Spikes in einer Drehrichtung D - insbesondere bei Vorwärtsfahrt - vorgeordnete und eine in Drehrichtung D nachgeordneten Griffkante bildet, wobei die vorgeordnete Griffkante mit in Drehrichtung D zwei spitz aufeinander zulaufenden, geradlinig erstreckten Griffkantenabschnitten ausgebildet ist, wobei zwischen den beiden spitz zu laufenden Griffkantenabschnitten ein mittlerer, geradlinig erstreckter Griffkantenabschnitt ausgebildet, wobei das in Drehrichtung D vorgeordnete Erstreckungsende des einen der beiden spitz aufeinander zulaufenden Griffkantenabschnitte unter Bildung einer Knickstelle in das eine Erstreckungsende des mittleren Griffkantenabschnitts übergeht und wobei das in D Drehrichtung vorgeordnete Erstreckungsende des anderen der beiden spitz aufeinander zulaufenden Griffkantenabschnitte unter Bildung einer Knickstelle in das andere Erstreckungsende des mittleren Griffkantenabschnitts übergeht. Die Gestaltung der vorgeordneten Griffkante hat sowohl besonderen Einfluss auf die Griffeigenschaften als auch auf den Straßenverschleiß. Sie muss sicher in die Eisoberfläche eindringen können, da sich der Spike sonst nicht mechanisch verzahnen kann. Die beiden spitz zulaufenden Griffkantenabschnitte ermöglichen in einfacher Weise ein wirkungsvolles Eindringen der Griffkante in das Eis, da die beim Abrollen des Reifens effektiv auftreffende Kantenlänge auf die Länge des mittleren Griffkantenabschnitts reduziert werden kann. Der mittlere Griffkantenabschnitt ermöglicht beim Eindringen in die Eisoberfläche eine entsprechende Verzahnungsstirnfläche für guten Wintergriff. Dabei wird sichergestellt, dass der Spikepin nicht punktuell auf die Straßenoberfläche auftrifft, sondern über die Kante des mittleren Griffkantenabschnitts abrollt, wodurch der Verschleiß der Straßenoberfläche reduziert werden kann.

Besonders vorteilhaft ist die Ausbildung eines Fahrzeugreifens gemäß den Merkmalen von Anspruch 9, wobei die in der Drehrichtung D nachgeordnete Griffkante des zweiten Spikes mit zwei entgegen der Drehrichtung D spitz aufeinander zulaufenden, geradlinig erstreckten Griffkantenabschnitten und mit einem zwischen den beiden spitz aufeinander zulaufenden Griffkantenabschnitten ausgebildeten mittleren, konkav gekrümmten Griffkantenabschnitt ausgebildet, wobei das in Drehrichtung D nachgeordnete Erstreckungsende des einen der beiden spitz aufeinander zulaufenden Griffkantenabschnitte unter Bildung einer Knickstelle in das eine Erstreckungsende des mittleren Griffkantenabschnitts übergeht und wobei das in Drehrichtung D nachgeordnete Erstreckungsende des anderen der beiden spitz aufeinander zulaufenden Griffkantenabschnitte unter Bildung einer Knickstelle in das andere Erstreckungsende des mittleren Griffkantenabschnitts übergeht. Die Ausbildung ermöglicht in einfacher Weise eine große wirksame Gesamtlänge der nachgeordneten Griffkante bei hoher Haltbarkeit. Die nachgeordnete Griffkante spielt bei der Übertragung von Bremskräften eine besondere Rolle. Besonders hohe Bremskräfte können bei geringem Reifenschlupf übertragen werden. Deswegen ist es wünschenswert die nachgeordnete Griffkante mit großer Gesamtlänge auszubilden, um eine größtmögliche Abstützung bei der Verzahnung mit der Eisoberfläche zu gewährleisten. Die Ausbildung mit dem mittleren Griffkantenabschnitt ermöglicht dabei, dass trotz großer wirksamer Gesamtlänge im sensiblen nachgeordneten Griffkantenbereich spitz zulaufende Kantenübergänge und eventuelle Abbruchtendenzen vermieden werden können.

Besonders vorteilhaft ist die Ausbildung eines Fahrzeugreifens gemäß den Merkmalen von Anspruch 10, wobei die umlaufende Griffkante des zweiten Spikes in axialer Richtung A zu beiden Seiten hin jeweils eine seitliche Griffkante bildet, wobei die seitliche Griffkante jeweils einen Erstreckungsabschnitt aufweist, in welchem die Griffkante geradlinig in Umgangsrichtung U des Reifens erstreckt ausgerichtet ist. Hierdurch kann zusätzlich die Seitenführung weiter begünstigt werden.

Besonders vorteilhaft ist die Ausbildung eines Fahrzeugreifens gemäß den Merkmalen von Anspruch 11, wobei der Fußflansch der zweiten Spikes jeweils in den senkrecht zur Längserstreckungsrichtung des ersten Spikes ausgebildeten Schnittebenen mit einer kreissegmentförmigen, mit einer ovalsegmentförmigen oder mit einer ellipsensegmentförmigen Schnittkontur ausgebildet ist, deren Segmentenden mit einem geradlinig erstreckten Abschnitt verbunden sind, wobei dieser geradlinige Abschnitt senkrecht zu einer Symmetrieachse der Kreisform bzw. senkrecht zur längeren Symmetrieachse der Ovals bzw. der Ellipse ausgerichtet ist, und wobei diese Symmetrieachse in Umfangsrichtung U des Reifens ausgerichtet ist. Durch diese Ausbildung können die Hebelverhältnisse am Spikefuß, und damit die Bettungssteifigkeit, entsprechend den individuell Erfordernissen des Reifens optimal eingestellt werden. Die Bettungssteifigkeit hat einen maßgeblichen Einfluss auf die Wintereigenschaften des Spikes in Traktions- und in Bremsrichtung, da die unterschiedlichen Spikebewegungen in Brems- und in Traktionsrichtung unterschiedliche Steifigkeiten benötigen, um maximale Kräfte übertragen zu können.

Besonders vorteilhaft ist die Ausbildung eines Fahrzeugreifens gemäß den Merkmalen von Anspruch 12, wobei zwischen dem axial mittleren Erstreckungsabschnitt des Laufstreifenprofils und wenigstens einem axial seitlichen Erstreckungsabschnitt des Laufstreifenprofils eine axialer Zwischenabschnitt des Laufstreifenprofils ausgebildet ist, in welchem über den Umfang des Reifens verteilt sowohl erste Spikes als auch zweite Spikes ausgebildet sind. Die Ausbildung ermöglicht weitere Gestaltungsfreiheiten in der individuellen Auslegung der Spikereifen. So können beispielsweise bei Reifen mit gewünschten Spikefolgen mit besonders hoher Anzahl von Spikes im äußeren Profilbereich, bei denen eine strikte Trennung der Spiketypen ein Defizit der Performance in Umfangsrichtung (Bremsen/Traktion) aufweisen, durch vermehrte Verwendung von Spikes des zweiten Typs im Übergangsbereich das Defizit ausgeglichen werden. Andererseits kann bei Reifen mit Spikefolgen, die ein Defizit in der Seitenführung haben und sich durch ein unharmonisches, "giftiges" Fahrverhalten mit einem sehr schmalen Grenzbereich in der Seitenführung auszeichnen, durch vermehrte Verwendung von Spikes des ersten Typs mit verbesserten Seitenführungseigenschaften, im Übergangsbereich entgegengewirkt werden.

Die Erfindung wird im Folgenden an Hand der in den Figuren 1 bis 13 dargestellten Ausführungsbeispiele näher erläutert. Hierin zeigen
- Fig.1: einen Umfangsabschnitt eines drehrichtungsgebundenen Fahrzeugluftreifens mit Spikes in Draufsicht,
- Fig.2: eine vergrößerte Darstellung eines Spikes aus dem zentralen Erstreckungsabschnitt des Laufstreifenprofils gemäß Detail II von Fig.1 in Draufsicht, jedoch ohne umgebende Gummimaterial,
- Fig.3: den Spike von Fig.2 in Seitenansicht gemäß Sichtrichtung III-III von Fig.2,
- Fig.4: den Spike von Fig.2 in Seitenansicht gemäß Sichtrichtung IV-IV von Fig.2,
- Fig.5: den Spike von Fig.2 in Seitenansicht gemäß Sichtrichtung V-V von Fig.2,
- Fig.6: den Spike von Fig.2 in ergänzender perspektivischer Darstellung,
- Fig.7: eine vergrößerte Darstellung eines Spikes aus dem Schulterbereichs des Laufstreifenprofils gemäß Detail VII von Fig.1 in Draufsicht, jedoch ohne das umgebende Gummimaterial,
- Fig.8: den Spike von Fig.7 in Seitenansicht gemäß Sichtrichtung VIII-VIII von Fig.7,
- Fig.9: den Spike von Fig.7 in Seitenansicht gemäß Sichtrichtung IX-IX von Fig.7,
- Fig.10: den Spike von Fig.7 in Seitenansicht gemäß Sichtrichtung X-X von Fig.7,
- Fig.11: den Spike von Fig.7 in ergänzender perspektivischer Darstellung,
- Fig.12: den Spike von Fig.7 in weiterer ergänzender perspektivischer Darstellung und
- Fig.13: das Laufstreifenprofil von Fig.1 in alternativer Ausführung der Ausrichtung der in den Reifenschultern angeordneten Spikes.

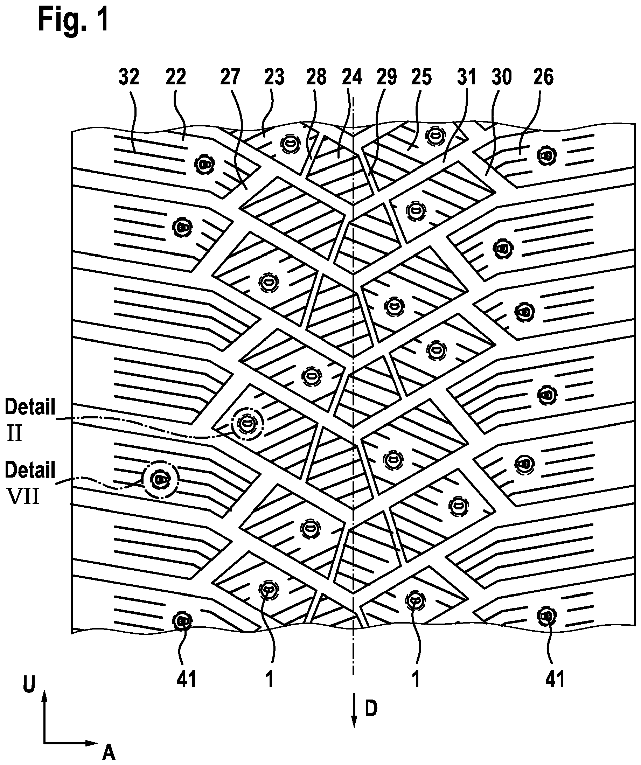

Fig.1 zeigt ein Laufstreifenprofil eines drehrichtungsgebundenen Fahrzeugluftreifens eines PKW-Reifens mit Wintereigenschaften mit mehreren in axialer Richtung A des Fahrzeugluftreifens nebeneinander angeordneten Profilblockreihen 22, 23, 24, 25 und 26 bekannter Art. Die Profilblockreihe 22 ist in bekannter Weise in Umfangsrichtung U über den gesamten Umfang des Fahrzeugluftreifens erstreckt ausgerichtet und aus in Umfangsrichtung U des Fahrzeugluftreifens hintereinander angeordneten und durch Querrillen 31 voneinander getrennten Profilblockelementen ausgebildet. Ebenso ist die Profilblockreihe 23, die Profilblockreihe 24 und die Profilblockreihe 25 jeweils in Umfangsrichtung U über den gesamten Umfang des Fahrzeugluftreifens erstreckt ausgerichtet und in bekannter Weise aus in Umfangsrichtung U hintereinander angeordneten und jeweils durch Querrillen 31 voneinander getrennten Profilblockelementen ausgebildet. Ebenso ist die Profilblockreihe 26 in Umfangsrichtung U über den gesamten Umfang des Fahrzeugluftreifens erstreckt ausgerichtet und in bekannter Weise aus in Umfangsrichtung U hintereinander angeordneten und jeweils durch Querrillen 31 voneinander getrennten Profilblockelementen ausgebildet. Die Profilblockreihen 22 und 26 sind Schulterprofilblockreihen. Die Profilblockreihen 23, 24 und 25 sind im zentralen Erstreckungsabschnitt des Profils ausgebildet. Die Profilblockelemente der Profilblockreihe 22 und die benachbarten Profilblockelemente der Profilblockreihe 23 sind durch in Umfangsrichtung U erstreckte Umfangsrillen 27 bekannter Art in axialer Richtung A voneinander getrennt ausgebildet. Die Profilblockelemente der Profilblockreihe 23 und die benachbarten Profilblockelemente der Profilblockreihe 24 sind durch Umfangsrillen 28 in axialer Richtung A voneinander getrennt ausgebildet. Die Profilblockelemente der Profilblockreihe 24 und die benachbarten Profilblockelemente der Profilblockreihe 25 sind durch Umfangsrillen 29 in axialer Richtung A voneinander getrennt angeordnet. Die Profilblockelemente der Profilblockreihe 25 und die benachbarten Profilblockelemente der Profilblockreihe 26 sind durch Umfangsrillen 30 in axialer Richtung A voneinander getrennt angeordnet.

Die Querrillen 31 erstrecken sich V-förmig über den gesamten axialen Erstreckungsbereich des Laufstreifenprofils ausgehend von der in der linken Schulter ausgebildeten Profilblockreihe 22 bis zu der in der rechten Schulter ausgebildeten Profilblockreihe 26 durch das Laufstreifenprofil.

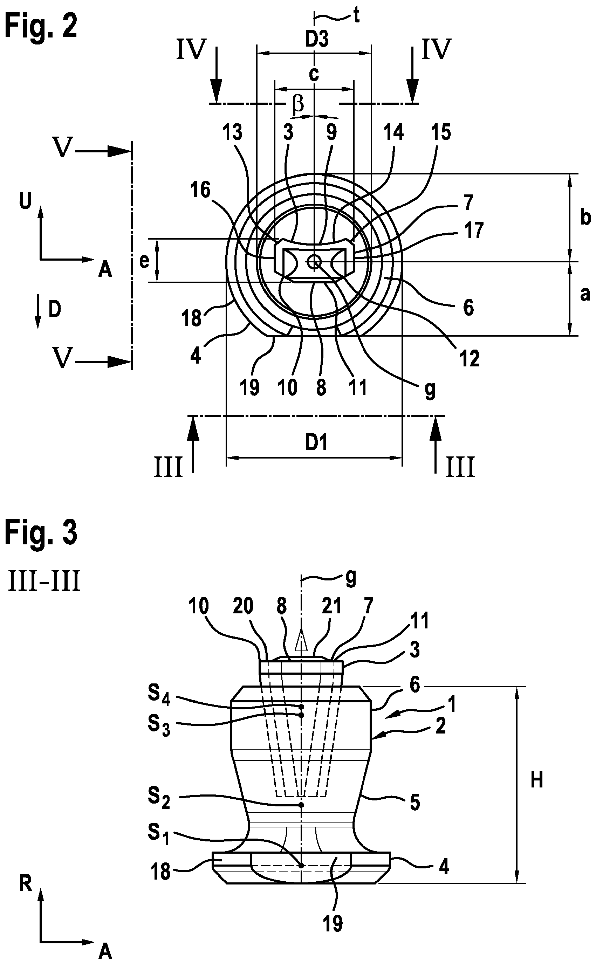

In Fig.1 und Fig.2 ist die Drehrichtung D des Fahrzeugluftreifens bei Vorwärtsfahrt eingetragen.

In den Profilblockreihen 23 und 25 des zentralen axialen Erstreckungsabschnitts des Laufstreifenprofils sind jeweils über den Umfang verteilt in verschiedenen Profilblockelementen Spikes 1 in bekannter Weise in Spikelöchern befestigt, welche in bekannter Weise zur Aufnahme der Spikes 1 in den Profilblockelementen ausgebildet sind.

In den Profilblockreihen 22 und 26 der Reifenschultern sind jeweils über den Umfang verteilt in verschiedenen Profilblockelementen Spikes 41 in bekannter Weise in Spikelöchern befestigt, welche in bekannter Weise zur Aufnahme der Spikes 41 in den Profilblockelementen ausgebildet sind.

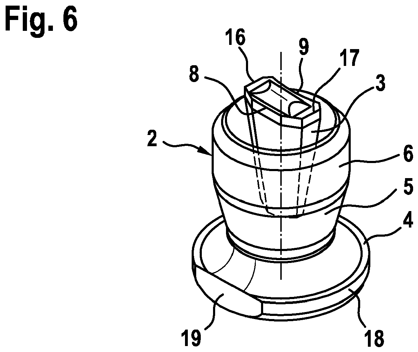

Fig.2 zeigt die Darstellung eines Spikes 1 in vergrößerter Darstellung und zwecks vereinfachter Darstellung ohne das umgebende Gummimaterial des Fahrzeugluftreifens. Der Spike 1 ist - wie in den Figuren 2 bis 7 dargestellt ist - in bekannter Weise aus einem Spikekörper 2 und aus einem Spikepin 3 ausgebildet. Der Spikekörper 2 ist in radialer Richtung R des Fahrzeugluftreifens gesehen von innen nach außen hin in bekannter Weise mit einem Fußflansch 4, einem sich daran anschließenden, taillierten Mittenteil 5 und einem sich daran anschließenden Oberflansch 6 ausgebildet. Der Spikekörper 2 ist in radialer Richtung R des Fahrzeugluftreifens mit einer Höhe H ausgebildet.

Der Oberflansch 6 erstreckt sich dabei in radialer Richtung R des Fahrzeugluftreifens über eine Erstreckungshöhe H₃ mit 0mm ≤ H₃ ≤ (0,92 H) und ist mit einer zylindrischen Mantelfläche mit einem Zylinderdurchmesser D₃ ausgebildet. Bei herkömmlichen PKW- oder VAN-Reifen ist die Erstreckungshöhe H₃ mit (0,25H) ≤ H₃ ≤ (0,48 H) gewählt ausgebildet.

Im Übergang in radialer Richtung R des Reifens nach außen hin zur Stirnfläche des Spikekörpers 2 sowie nach innen zum taillierten Mittenteil 5 ist der Oberflansch 6 konzentrisch zur Zylinderachse angefast.

Der Fußflansch 4 ist mit einer in radialer Richtung R des Fahrzeugluftreifens erstreckten Erstreckungshöhe H₁ ausgebildet mit (0,08 H) ≤ H₁ ≤ (0,4 H). Bei herkömmlichen PKW- oder VAN-Reifen ist die Erstreckungshöhe H₁ mit (0,1 H) ≤ H₁ ≤ (0,2 H) gewählt ausgebildet.

Der Fußflansch 4 ist mit zylinderförmigen Mantelfläche aus einem Mantelflächenabschnitt 18 und einem Mantelflächenabschnitt 19 ausgebildet, wobei der Mantelflächenabschnitt 18 das Segment einer Zylindermantelfläche mit Zylinderachse und Durchmesser D₁ bildet und der Mantelflächenabschnitt 19 eine ebene Fläche bildet, die die gedachte vervollständigte Zylindermantelfläche des Segments parallel zur Zylinderachse schneidet.

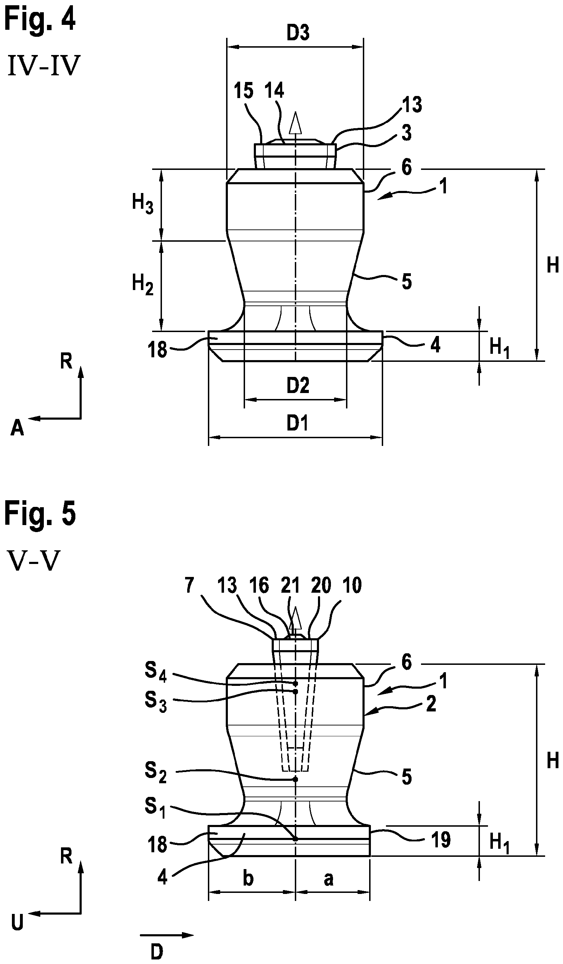

Wie in Fig.2 und Fig.5 zu erkennen ist, ist der Mantelflächenabschnitt 19 in den Schnittebenen senkrecht zur Haupterstreckungsrichtung des Spikes 1 und somit senkrecht zur radialen Erstreckungsrichtung R des Reifens geradlinig erstreckt ausgebildet und der Abschnitt 18 kreissegmentförmig. Der Mantelflächenabschnitt 19 und somit die geradlinigen Schnittkonturlinien sind in Drehrichtung D der Position des Massenschwerpunktes S₁ des Fußflansches 18 im Abstand a zur Position des Massenschwerpunktes S₁ vorgeordnet positioniert. Der zylindersegmentförmige Mantelabschnitt 18 und somit die kreissegmentförmige Schnittkonturlinie erstrecken sich entgegen der Drehrichtung D bis in eine Position in Abstand b vom Massenschwerpunkt S₁ des Fußflansches 4. Die Abstände b und a sind dabei mit b > a ausgebildet. Ebenso ist (a + b) < D₁ ausgebildet.

Wie in den Figuren 3 bis 6 zu erkennen ist, ist auch der Fußflansch 4 in seinem Übergang zu der den Spikekörper 2 in radialer Richtung R des Reifens nach innen hin begrenzenden Stirnfläche angefast ausgebildet. Das Mittenteil 5 des Spikekörpers 2 ist in bekannter Weise tailliert ausgebildet und erstreckt sich über eine in Längserstreckungsrichtung des Spikes 1 und somit in radialer Richtung R des Reifens gemessene Erstreckungshöhe H₂ mit 0mm ≤ H₂ ≤ (0,92 H). Bei herkömmlichen PKW- oder VAN-Reifen ist die Erstreckungshöhe H₂ mit (0,4H) ≤ H₂ ≤ (0,55 H) gewählt ausgebildet.

Das Mittenteil 5 ist in allen Querschnittsebenen senkrecht zur Haupterstreckungsrichtung des Spikes 1 und somit zur radialen Erstreckungsrichtung R des Reifens mit einer kreisförmigen Schnittkontur seiner Mantelfläche ausgebildet. Der Durchmesser der kreisförmigen Schnittkonturen wird dabei ausgehend vom Durchmesser D₃ in der Position des Überganges zum Oberflansch 6 längs der Erstreckung des Spikes 1 in Richtung zum Fußflansch 4 hin kontinuierlich kleiner bis zur Erreichung eines Minimalwertes D₂ und nach Erreichen dieses minimalen Wertes bis zum Übergang zum Fuß flansch 4 kontinuierlich größer.

In dem den Spikekörper 2 an dessen Oberflansch 6 in radialer Richtung R des Reifens nach außen hin begrenzenden Stirnfläche ist in bekannter Weise eine Öffnung zur Aufnahme und zur Befestigung des Spikepins 3 ausgebildet, in welcher der Spikepin 3 im montierten Zustand im Fahrzeugluftreifen befestigt ist. Der Spikepin 3 erstreckt sich im Reifen von der am Oberflansch 6 des Spikekörpers 2nach radial außen begrenzenden Stirnfläche in radialer Richtung R des Fahrzeugluftreifens weiter nach außen und bildet dabei die Spikespitze. Die Spikespitze und somit der Spikepin 3 ist in radialer Richtung R des Reifens nach außen hin mit einem ein Plateau 20 bildenden Fläche begrenzt. Der Übergang zwischen der Mantelfläche des Spikepins 3 und dem Plateau 20 ist scharfkantig und bildet dabei eine um den Spikepin 3 umlaufende Griffkante 7. In radialer Richtung R nach außen hin erstreckt sich in bekannter Weise mit Abstand zur umlaufenden Griffkante 7 eine radiale Erhebung 21 aus dem Plateau 20, welche das Abrollen erleichtern kann.

Die umlaufende Griffkante 7 ist dabei zu einer eine Symmetrielinie bildenden Geraden t symmetrisch ausgebildet. Die Symmetrielinie t ist dabei unter Einschluss eines Neigungswinkels β mit 0° ≤ β ≤ 20° zur Umfangsrichtung U ausgebildet. In dem in Fig. 1 dargestellten Ausführungsbeispiel ist der Winkel β mit β = 0° gewählt.

Die umlaufende Griffkante 7 ist mit einer in Drehrichtung D bei Vorwärtsfahrt an seinem vorgeordneten Erstreckungsabschnitt mit einer vorgeordneten Griffkante 8 und an seinem in Drehrichtung D bei Vorwärtsfahrt nachgeordneten Erstreckungsabschnitt mit einem nach nachgeordneten Griffkante 9 und mit in axialer Richtung A des Fahrzeugluftreifens den Spikepin 3 begrenzenden Griffkantenabschnitten 16 und 17 ausgebildet, welche beide jeweils in Umfangsrichtung U des Fahrzeugluftreifens erstreckt ausgerichtet sind.

Die vorgeordnete Griffkante 8 ist aus zwei seitlichen, jeweils geradlinig erstreckten Griffkantenabschnitten 10 und 12 und einem in axialer Richtung A des Fahrzeugluftreifens zwischen den beiden seitlichen Griffkantenabschnitten 10 und 12 angeordneten mittleren Erstreckungsabschnitt 11 ausgebildet. Die seitlichen, geradlinigen Griffkantenabschnitte 10 und 12 sind dabei in Drehrichtung D gesehen V- oder pfeilförmig spitz aufeinander zulaufend ausgerichtet ausgebildet. Der mittlere Erstreckungsabschnitt 11 ist geradlinig in axialer Richtung A des Fahrzeugluftreifens erstreckt ausgerichtet ausgebildet. Das in Drehrichtung D gesehen vordere Erstreckungsende des seitlichen Griffkantenabschnitts 10 bildet dabei das eine zum Griffkantenabschnitt 10 hin gerichtete Erstreckungsende des mittleren Erstreckungsabschnitts 11 und geht dort unter Einschluss eine Knickes im Erstreckungsverlauf der vorgeordneten Griffkante 8 und somit der umlaufenden Griffkante 7 in den mittleren Erstreckungsabschnitt 11 über. Ebenso bildet das in Drehrichtung D gerichtete, vordere Erstreckungsende des seitlichen Griffkantenabschnitts 12 das zum seitlichen Erstreckungsabschnitt 12 gerichtete Erstreckungsende des mittleren Erstreckungsabschnitt 11 und geht dort unter Einschluss eines Knickes im Erstreckungsverlauf der vorgeordneten Griffkante 8 und somit der umlaufenden Griffkante 7 in den mittleren Erstreckungsabschnitt 11 über.

Das in Drehrichtung D gesehen hintere Erstreckungsende des seitlichen Griffkantenabschnitts 10 bildet das in Drehrichtung D gesehen vordere Erstreckungsende des Griffkantenabschnitts 16 und geht unter Einschluss eines Knickes im Erstreckungsverlauf der umlaufenden Griffkante 7 in den Griffkantenabschnitt 16 über. Ebenso bildet das in Drehrichtung D gesehene hintere Erstreckungsende des seitlichen Griffkantenabschnitts 12 das in Drehrichtung D vordere Ende des Griffkantenabschnitts 17 und geht dort unter Einschluss eines Knickes im Erstreckungsverlauf der umlaufenden Griffkante 7 in den Griffkantenabschnitt 17 über.

Die in Drehrichtung D nachgeordnete Griffkante 9 ist aus zwei seitlichen erstreckten Griffkantenabschnitten 13 und 15 und einem in axialer Richtung A des Fahrzeugluftreifens zwischen den beiden seitlichen Griffkantenabschnitten 13 und 15 angeordneten mittleren Erstreckungsabschnitt 14 ausgebildet. Die seitlichen Griffkantenabschnitte 13 und 15 sind geradlinig erstreckt und entgegen der Drehrichtung D gesehen V- oder pfeilförmig spitz aufeinander zulaufend ausgerichtet ausgebildet. Der mittlere Erstreckungsabschnitt 14 ist mit einem konkav gekrümmten Krümmungsverlauf ausgebildet, d.h. der Krümmungsradius des Krümmungsverlaufes 14 ist auf der vom Spikepin 3 wegweisenden Seite der Krümmungslinie ausgebildet.

Das in Drehrichtung D nachgeordnet ausgebildete Erstreckungsende des seitlichen Griffkantenabschnitts 13 bildet das zum Griffkantenabschnitt 13 hin gebildete Erstreckungsende des mittleren Erstreckungsabschnitt 14 und geht dort unter Einschluss eines Knickes im Erstreckungsverlauf der hinteren Griffkante 9 und somit der umlaufenden Griffkante 7 in den Erstreckungsabschnitt 14 über. Das in Drehrichtung D nachgeordnet ausgebildete Erstreckungsende des seitlichen Griffkantenabschnitts 15 bildet das zum Griffkantenabschnitt 15 hin gebildete Erstreckungsende des mittleren Erstreckungsabschnitt 14 und geht dort unter Einschluss eines Knickes im Erstreckungsverlauf der hinteren Griffkante 9 und somit der umlaufenden Griffkante 7 in den Erstreckungsabschnitt 14 über.

Das in Drehrichtung D vorgeordnete Erstreckungsende des Griffkantenabschnitts 13 bildet das in Drehrichtung D nachgeordnete Erstreckungsende des Griffkantenabschnitts 16 und geht dort unter Einschluss eines Knickes im Erstreckungsverlauf der umlaufenden Griffkante 7 in den Griffkantenabschnitt 16 über. Das in Drehrichtung D vorgeordnete Erstreckungsende des Griffkantenabschnitts 15 bildet das in Drehrichtung D nachgeordnete Erstreckungsende des Griffkantenabschnitts 17 und geht dort unter Einschluss eines Knickes im Erstreckungsverlauf der umlaufenden Griffkante 7 in den Griffkantenabschnitt 17 über.

Die Projektion der umlaufenden Griffkante 7 in axialer Richtung A des Reifens weist eine Projektionslänge e auf. Die Projektion der umlaufenden Griffkante 7 in Umfangsrichtung U des Reifens weist eine Projektionslänge c auf, welche der Breite des Spikepins 3 in der radialen Position der Griffkante 7 entspricht und die wirksame Griffkantenlänge des Spikes 1 in Umfangsrichtung U angibt. Die Projektionslänge e entspricht der in Umfangsrichtung U gemessenen Erstreckungslänge des Spikepins 3 in der radialen Position der Griffkante 7 und gibt die wirksame Griffkantenlänge des Spikes in axialer Richtung A des Reifens an. Dabei sind c und e so dimensioniert, dass c > e ausgebildet ist.

Die in axialer Richtung gemessene Erstreckungslänge des mittleren Erstreckungsabschnitts 11 der vorderen Griffkante 8 ist dabei im Bereich von mit 30% bis 80% der Projektionslänge c ausgebildet. Die in axialer Richtung A gemessene Erstreckungslänge des mittleren Erstreckungsabschnitts 14 der hinteren Griffkante 9 ist dabei größer ausgebildet als die in axialer Richtung A gemessene Erstreckungslänge des mittleren Erstreckungsabschnitts 11 der vorderen Griffkante 8.

Wie in den Figuren 3, 5 und 2 dargestellt ist, liegen in einem Ausführungsbeispiel des Spikes 1 der Massenschwerpunkt S₁ des Fußflansches 4 des Spikekörpers 2, der Massenschwerpunkt S₂ des Mittelteils 5 des Spikekörpers 2, der Massenschwerpunkt S₃ des Oberflansches 6 sowie der Massenschwerpunkt S₄ des Spikepins 3 auf einer gemeinsamen Geraden g, welche sich in radialer Richtung R des Fahrzeugluftreifens erstreckt. Auf dieser Geraden liegt in einem Ausführungsbeispiel auch der nicht eingezeichnete Gesamtmassenschwerpunkt S des Spikes 1.

In den beschriebenen und in den Figuren dargestellten Ausführungsbeispielen des Spikes 1 ist der Mittelteil 5 sowie der Oberflansch 6 in ihrer Mantelfläche in den Schnittebenen senkrecht zur Haupterstreckungsrichtung des Spikes 1 und zur radialen Erstreckungsrichtung R des Reifens jeweils kreisförmig ausgebildet.

In anderer, nicht dargestellter Ausführung sind die Schnittkonturen der Mantelflächen vom Oberflansch 6 bzw. vom Mittelteil 5 des Spikes 1 jeweils oval oder elliptisch ausgebildet, wobei die größere Hauptachse des Ovals bzw. der Ellipse in Umfangsrichtung U des Fahrzeugluftreifens ausgerichtet ist. Die oben angegebenen Durchmesser D₂ bzw. D₃ bilden dann jeweils den größeren Durchmesser der jeweiligen Ellipse bzw. des Ovals.

In den oben beschriebenen und in den Figuren dargestellten Ausführungsbeispielen des Spikes 1 ist der Fußflansch im Bereich seines Mantelflächenabschnitts 18 als zylindersegmentförmig ausgebildet mit kreisförmiger Grundfläche des Zylinders und mit in den Schnittebenen senkrecht zur Haupterstreckungsrichtung des Spikes 1 und zur radialen Erstreckungsrichtung R des Reifens kreissegmentförmiger Schnittlinienkontur der Zylindersegmentform.

In alternativer, nicht dargestellter Ausführung des Spikes 1 ist der Mantelflächenabschnitt 18 ein zylindersegmentförmiger Abschnitt mit ovaler bzw. elliptischer Grundfläche des Zylinders und mit in den Schnittebenen senkrecht zur Haupterstreckungsrichtung des Spikes 1 und zur radialen Erstreckungsrichtung R des Reifens ovalsegmentförmiger bzw. ellipsensegmentförmiger Schnittlinienkontur der Zylindersegmentform, wobei die größere Hauptachse der Ellipse bzw. des Ovals in Umfangserstreckungsrichtung U des Fahrzeugluftreifens ausgerichtet ist. Der oben angegebene Durchmesser D₁ entspricht dann dem größeren Durchmesser des Ovals bzw. der Ellipse.

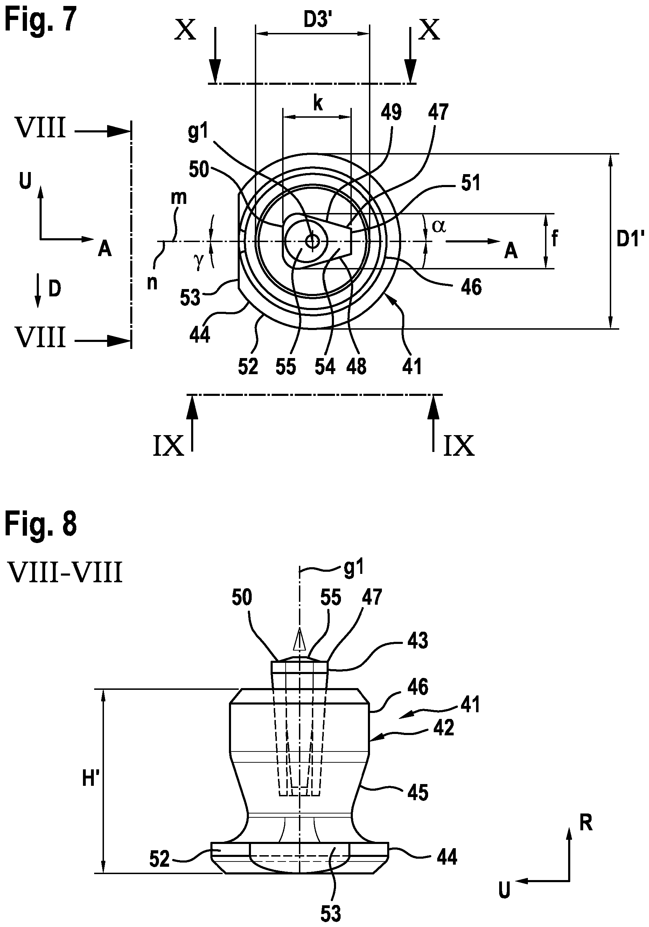

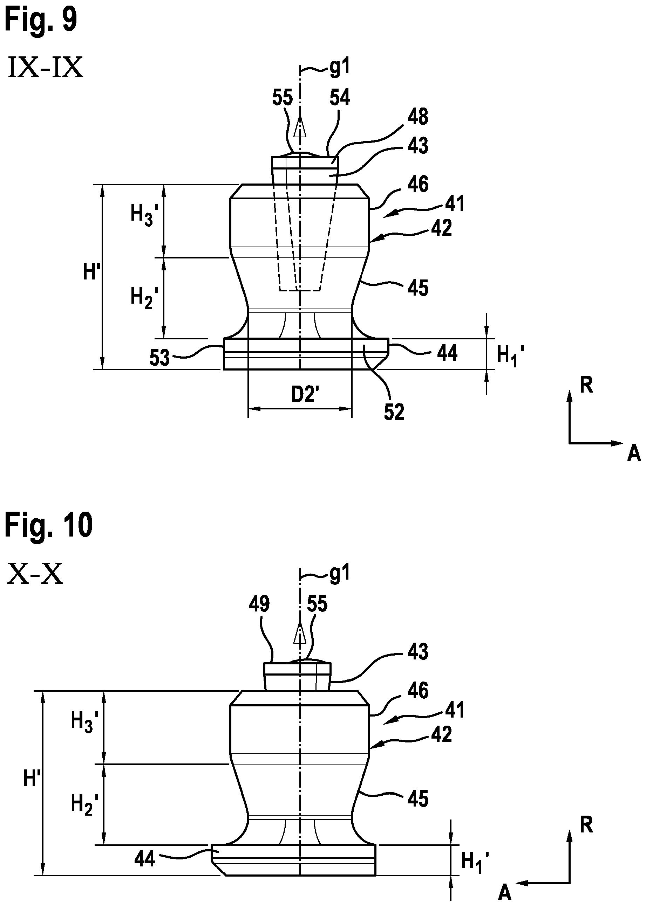

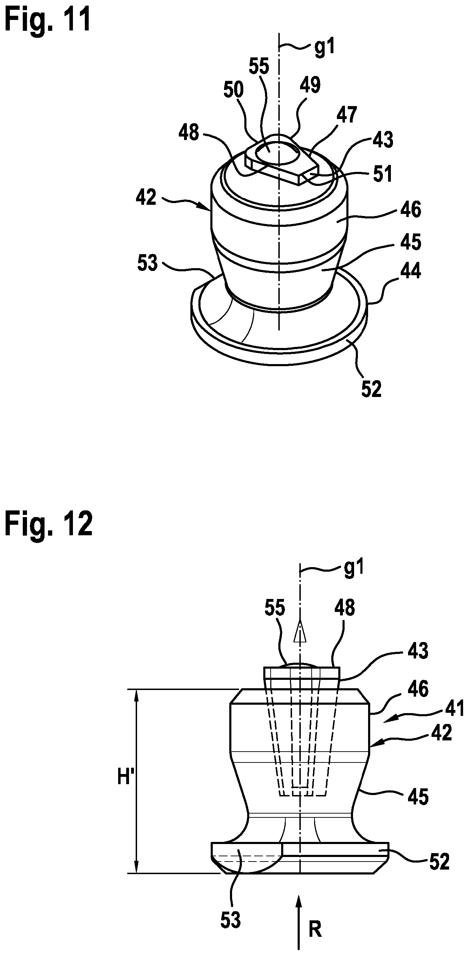

Fig.7 zeigt die Darstellung eines Spikes 41 in vergrößerter Darstellung und zwecks vereinfachter Darstellung ohne das umgebende Gummimaterial des Fahrzeugluftreifens. Der Spike 41 ist - wie in den Figuren 7 bis 12 dargestellt ist - in bekannter Weise aus einem Spikekörper 42 und aus einem Spikepin 43 ausgebildet. Der Spikekörper 42 ist in radialer Richtung R des Fahrzeugluftreifens gesehen von innen nach außen hin in bekannter Weise mit einem Fußflansch 44, einem sich daran anschließenden, taillierten Mittenteil 45 und einem sich daran anschließenden Oberflansch 46 ausgebildet. Der Spikekörper 42 ist in radialer Richtung R des Fahrzeugluftreifens mit einer Höhe H' ausgebildet.

Der Oberflansch 46 erstreckt sich dabei in radialer Richtung R des Fahrzeugluftreifens über eine Erstreckungshöhe H'₃ mit 0mm ≤ H'₃ ≤ (0,92 H') und ist mit einer zylindrischen Mantelfläche mit einem Zylinderdurchmesser D'₃ ausgebildet. Bei herkömmlichen PKW- oder VAN-Reifen ist die Erstreckungshöhe H₃ mit (0,25H') ≤ H'₃ ≤ (0,48 H') gewählt ausgebildet.

Im Übergang in radialer Richtung R des Reifens nach außen hin zur Stirnfläche des Spikekörpers 42 sowie nach innen zum taillierten Mittenteil 45 ist der Oberflansch 46 konzentrisch zur Zylinderachse angefast.

Der Fußflansch 44 ist mit einer in radialer Richtung R des Fahrzeugluftreifens erstreckten Erstreckungshöhe H'₁ ausgebildet mit (0,08 H') ≤ H'₁ ≤ (0,4 H'). Bei herkömmlichen PKW- oder VAN-Reifen ist die Erstreckungshöhe H'₁ mit (0,1 H') ≤ H'₁ ≤ (0,2 H') gewählt ausgebildet.

Wie in den Figuren 7 bis 12 zu erkennen ist, ist auch der Fuß flansch 44 in seinem Übergang zu der den Spikekörper 42 in radialer Richtung R des Reifens nach innen hin begrenzenden Stirnfläche angefasst ausgebildet.

Das Mittenteil 45 des Spikekörpers 42 ist in bekannter Weise tailliert ausgebildet und erstreckt sich über eine in Längserstreckungsrichtung des Spikes 41 und somit in radialer Richtung R des Reifens gemessene Erstreckungshöhe H'₂ mit 0mm ≤ H'₂ ≤ (0,92 H'). Bei herkömmlichen PKW- oder VAN-Reifen ist die Erstreckungshöhe H₂ mit (0,4H') ≤ H'₂ ≤ (0,55 H') gewählt ausgebildet.

Das Mittenteil 45 ist in allen Querschnittsebenen senkrecht zur Haupterstreckungsrichtung des Spikes 41 und somit zur radialen Erstreckungsrichtung R des Reifens mit einer kreisförmigen Schnittkontur seiner Mantelfläche ausgebildet. Der Durchmesser der kreisförmigen Schnittkonturen wird dabei ausgehend vom Durchmesser D'₃ in der Position des Überganges zum Oberflansch 6 längs der Erstreckung des Spikes 41 in Richtung zum Fußflansch 44 hin kontinuierlich kleiner bis zur Erreichung eines Minimalwertes D'₂ und nach Erreichen dieses minimalen Wertes bis zum Übergang zum Fuß flansch 44 kontinuierlich größer.

In dem den Spikekörper 42 an dessen Oberflansch 46 in radialer Richtung R des Reifens nach außen hin begrenzenden Stirnfläche ist in bekannter Weise eine Öffnung zur Aufnahme und zur Befestigung des Spikepins 43 ausgebildet, in welcher der Spikepin 43 im montierten Zustand im Fahrzeugluftreifen befestigt ist. Der Spikepin 43 erstreckt sich im Reifen von der am Oberflansch 46 des Spikekörpers 42 nach radial außen begrenzenden Stirnfläche in radialer Richtung R des Fahrzeugluftreifens weiter nach außen und bildet dabei die Spikespitze. Die Spikespitze und somit der Spikepin 43 ist in radialer Richtung R des Reifens nach außen hin mit einem ein Plateau 54 bildenden Fläche begrenzt. Der Übergang zwischen der Mantelfläche des Spikepins 43 und dem Plateau 54 ist scharfkantig und bildet dabei eine um den Spikepin 43 umlaufende Griffkante 47. In radialer Richtung R nach außen hin erstreckt sich in bekannter Weise mit Abstand zur Griffkante 47 eine radiale Erhebung 55 aus dem Plateau 54, welche das Abrollen erleichtern kann.

Die umlaufende Griffkante 47 der Spikespitze 43 ist mit einer in Drehrichtung D des Reifens der Spikespitze vorgeordneten Griffkante 48, mit einer in Drehrichtung D der Spikespitze nachgeordneten Griffkante 49, mit einer in axialer Richtung A vom zentralen Erstreckungsabschnitt des Fahrzeugluftreifens wegweisenden Richtung der Spikespitze 43 ausgebildeten, seitlichen Griffkante 50 und mit einer in axialer Richtung A zum mittleren Erstreckungsabschnitt des Laufstreifenprofils hinweisenden Richtung der Spikespitze 43 ausgebildeten, seitlichen Griffkante 51 ausgebildet. Die umlaufende Griffkante 47 ist dabei zu einer eine Symmetrielinie bildenden Geraden m symmetrisch ausgebildet. Die die Symmetrielinie bildende Gerade m ist dabei unter Einschluss eines Neigungswinkels α mit 0° ≤ α ≤ 35° zur axialen Richtung A des Fahrzeugluftreifens ausgerichtet.

In Fig.1 sowie in Fig.7 ist der Winkel α mit α = 0° gewählt.

Die seitlichen Griffkantenabschnitte 50 und 51 sind senkrecht zu Symmetrielinie m und somit - im dargestellten Ausführungsbeispiel von Fig.1 und Fig.7 - senkrecht zur axialen Richtung A ausgerichtet. Die seitliche Griffkante 51 ist dabei kürzer ausgebildet als die seitliche Griffkante 50. Das in Drehrichtung D vorgeordnete Erstreckungsende der Griffkante 51 bildet das zur Reifenmitte hinweisende Erstreckungsende der Griffkante 48 und geht in die Griffkante 48 unter Einschluss eines Knickes im Konturverlauf der umlaufenden Griffkante 47 über. Das in Drehrichtung D nachgeordnete Erstreckungsende der Griffkante 51 bildet das zur Reifenmitte hin weisende Erstreckungsende der Griffkante 49 und geht unter Knickbildung im Konturverlauf der umlaufenden Griffkante 47 in die Griffkante 49 über. Das in Drehrichtung D vorgeordnete Erstreckungsende der Griffkante 50 bildet das zur Reifenaußenseite hinweisende Erstreckungsende der Griffkante 48 und geht unter Knickbildung des Konturverlaufs der umlaufenden Griffkante 47 in die Griffkante 48 über. Das in Drehrichtung D nachgeordnete Erstreckungsende der Griffkante 50 bildet das zur Reifenaußenseite hinweisende Erstreckungsende der Griffkante 49 und geht unter Knickbildung des Konturverlaufs der umlaufende Griffkante 47 in die Griffkante 49 über. Der Übergang zwischen Griffkante 48 und Griffkante 50 sowie zwischen Griffkante 50 und Griffkante 49 ist dabei abgerundet ausgebildet. Die Griffkanten 48 und 49 erstrecken sich zwischen Griffkante 50 und Griffkante 51 in Richtung zur Reifenmitte hin V-förmig aufeinander zu und schneiden in ihrer Verlängerung über die Griffkante 51 hinaus die Symmetrielinie m. Dementsprechend spreizten sich die beiden Griffkanten 48 und 49 in Erstreckungsrichtung von der Griffkante 50 zur Reifenaußenseite hin bis zu ihrem Erstreckungsende an der Griffkante 50 V-förmig unter Einschluss eines Winkels.

Im dargestellten Ausführungsbeispiel ist die Griffkante 50 sowie die Griffkante 51 jeweils geradlinig erstreckt ausgebildet.

In einem anderen, nicht dargestellten Ausführungsbeispiel ist die Griffkante 50 konkav gekrümmt ausgebildet, d.h. sie ist um einen Krümmungsradius um einen Mittelpunkt, der auf der Symmetrielinie m auf der von der Griffkante 50 von der Spikespitze 43 wegweisenden Seite angeordnet ist, gekrümmt.

Die Projektion der umlaufenden Griffkante 47 in axialer Richtung A des Reifens weist eine Projektionslänge f mit f > e auf. Die Projektion der umlaufenden Griffkante 47 in Umfangsrichtung U des Reifens weist eine Projektionslänge k mit
k < c auf, welche der Breite des Spikepins 43 in der radialen Position der Griffkante 47 entspricht und die wirksame Griffkantenlänge des Spikes 41 in Umfangsrichtung U angibt. Die Projektionslänge f entspricht der in Umfangsrichtung U gemessenen Erstreckungslänge des Spikepins 43 in der radialen Position der Griffkante 47 und gibt die wirksame Griffkantenlänge des Spikes in axialer Richtung A des Reifens an. Dabei sind k und f so dimensioniert, dass k > f ausgebildet ist.

Der Fußflansch 44 des Spikekörpers 42 ist analog zum Fuß flansch 4 des Spikekörpers 2 vom Spike 1 mit einer zylindersegmentförmigen Mantelfläche mit den Mantelflächenabschnitten 52 und 53 ausgebildet. Der Mantelflächenabschnitt 52 bildet dabei die gekrümmte Zylindermantelform des Zylindersegments und der Mantelflächenabschnitt 53 die ebene, den Zylinder abschneidende Form des Zylindersegments. In den Querschnittsebenen senkrecht zur Spikeerstreckungsachse g₁ bildet der Flansch 44 somit eine kreissegmentförmige Schnittkontur, wobei die Schnittkontur des Mantelflächenabschnitts 52 den kreisförmigen Abschnitt und die Schnittkontur des Mantelflächenabschnitts 53 den geradlinigen Verbindungsabschnitt bildet. Der Kreis des Kreissegments ist mit einem Durchmesser D'₃ ausgebildet. Die Kreissegmentkontur ist symmetrisch zu einer die Spikeachse g₁ schneidenden, geradlinigen Symmetrieachse n ausgebildet, wobei der durch die ebene Zylindermantelfläche 53 gebildete geradlinige Erstreckungsabschnitt des Kreissegmentes senkrecht die Symmetrielinie n schneidet. Der Kreismittelpunkt liegt innerhalb des Kreissegmentes. Die Symmetrielinie n ist unter Einschluss eines Neigungswinkels γ mit 0° ≤ γ ≤ 45° zur axialen Richtung A ausgerichtet. Im dargestellten Ausführungsbeispiel der Figuren 1 und 7 ist γ = α = 0° gewählt.

Der Mantelabschnitt 53 ist - wie in Fig.7 zu erkennen ist - auf der vom mittleren axialen Erstreckungsabschnitt des Laufstreifenprofils wegweisenden Seite des Fußflansches 44 angeordnet.

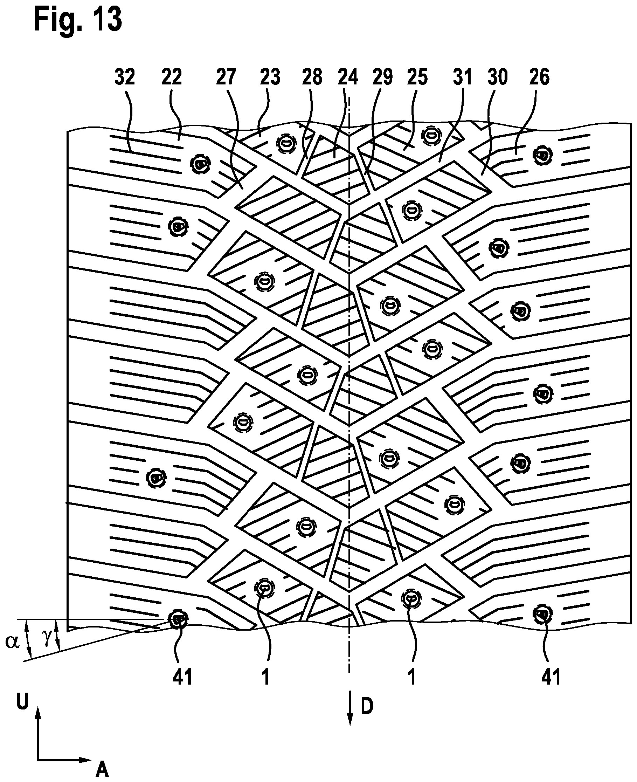

Fig.13 zeigt ein Ausführungsbeispiel eines Laufstreifenprofils, das wie das Laufstreifenprofil von Fig. 1 ausgebildet ist, bei welchem jedoch die Spikes 41 unter Einschluss eines Winkels α = γ = 13° ausgebildet sind.

Die Figuren 1 und 13 ist jeweils ein Ausführungsbeispiel eines Laufstreifenprofils dargestellt, bei welchen zwischen den mittleren Profilblockreihen 23 und 25 eine zentrale Profilblockreihe 24 ohne Spikes ausgebildet ist. In alternativer, nicht dargestellter Ausführung sind auch in der zentralen Profilblockreihe 24 Spikes 1 ausgebildet.

Die Figuren 1 und 13 zeigen jeweils ein Ausführungsbeispiel eines Laufstreifenprofils, bei welchen in den Schulterprofilblockreihen jeweils ausschließlich Spikes 41 und in den zwischen den Schulterprofilblockreihen ausgebildeten mittleren Profilblockreihen ausschließlich Spikes 1 ausgebildet sind.

In anderer, nicht dargestellter Ausführung werden in den Schulterprofilblockreihen ausschließlich Spikes 41 und in mittleren Profilblockreihen ausschließlich Spikes 1 ausgebildet. Darüber hinaus sind zwischen Schulterprofilblockreihen und zentralen mittleren Profilblockreihen weitere Zwischenprofilblockreihen ausgebildet, welche sich ebenfalls über den gesamten Umfang des Fahrzeugluftreifens erstrecken und in welchen sowohl Spikes 1 als auch Spikes 41 über den Umfang und über die axiale Erstreckung der Profilblockreihe verteilt angeordnet sind.

In den beschriebenen und in den Figuren dargestellten Ausführungsbeispielen ist der Mittelteil 45 sowie der Oberflansch 46 in ihrer Mantelfläche in den Schnittebenen senkrecht zur Haupterstreckungsrichtung des Spikes 41 und zur radialen Erstreckungsrichtung R des Reifens jeweils kreisförmig ausgebildet.

In anderer, nicht dargestellter Ausführung sind die Schnittkonturen der Mantelflächen vom Oberflansch 46 bzw. vom Mittelteil 45 jeweils oval oder elliptisch ausgebildet, wobei die größere Hauptachse des Ovals bzw. der Ellipse in axialer Richtung A des Fahrzeugluftreifens ausgerichtet ist. Die oben angegebenen Durchmesser D'₂ bzw. D'₃ bilden dann jeweils den größeren Durchmesser der jeweiligen Ellipse bzw. des Ovals.

In den oben beschriebenen und in den Figuren dargestellten Ausführungsbeispielen ist der Fußflansch 44 des Spikes 41 als zylindersegmentförmig ausgebildet mit kreisförmiger Grundfläche des Zylinders und mit in den Schnittebenen senkrecht zur Haupterstreckungsrichtung des Spikes 41 und zur radialen Erstreckungsrichtung R des Reifens kreissegmentförmiger Schnittlinienkontur der Zylindersegmentform.

In alternativer, nicht dargestellter Ausführung ist der Mantelflächenabschnitt 53 ein zylindersegmentförmiger Abschnitt mit ovaler bzw. elliptischer Grundfläche des Zylinders und mit in den Schnittebenen senkrecht zur Haupterstreckungsrichtung des Spikes 41 und zur radialen Erstreckungsrichtung R des Reifens ovalsegmentförmiger bzw. ellipsensegmentförmiger Schnittlinienkontur der Zylindersegmentform, wobei die größere Hauptachse der Ellipse bzw. des Ovals in Erstreckungsrichtung der Richtung der Symmetrieachse n ausgerichtet ist. Der oben angegebene Durchmesser D'₁ entspricht dann dem größeren Durchmesser des Ovals bzw. der Ellipse.

### Bezugszeichenliste

- 1: Spike
- 2: Spikeköper
- 3: Spikepin
- 4: Fußflansch
- 5: Taillierter Mittenabschnitt
- 6: Oberflansch
- 7: Umlaufende Griffkante
- 8: Vorgeordnete Griffkante
- 9: Nachgeordnete Griffkante
- 10: Griffkantenabschnitt
- 11: Mittlerer Griffkantenabschnitt
- 12: Griffkantenabschnitt
- 13: Griffkantenabschnitt
- 14: Mittlerer Griffkantenabschnitt
- 15: Griffkantenabschnitt
- 16: Griffkantenabschnitt
- 17: Griffkantenabschnitt
- 18: Mantelkonturabschnitt
- 19: Mantelkonturabschnitt
- 20: Plateau
- 21: Erhebung
- 22: Profilblockreihe
- 23: Profilblockreihe
- 24: Profilblockreihe
- 25: Profilblockreihe
- 26: Profilblockreihe
- 27: Umfangsrille
- 28: Umfangsrille
- 29: Umfangsrille
- 30: Umfangsrille
- 31: Querrille
- 32: Feineinschnitt
- 41: Spike
- 42: Spikeköper
- 43: Spikepin
- 44: Fußflansch
- 45: Taillierter Mittenabschnitt
- 46: Oberflansch
- 47: Umlaufende Griffkante
- 48: Vorgeordnete Griffkante
- 49: Nachgeordnete Griffkante
- 50: Griffkantenabschnitt
- 51: Griffkantenabschnitt
- 52: Mantelkonturabschnitt
- 53: Mantelkonturabschnitt
- 54: Plateau
- 55: Erhebung

## Patentansprüche

1. Fahrzeugreifen mit Laufstreifenprofil und Spikes (1, 41), welche mit einer Spikespitze mit umlaufender Griffkante (7, 47) ausgebildet sind, mit zwei axial seitlichen Erstreckungsabschnitten (22, 26) des Laufstreifenprofils, in welchen jeweils ausschließlich erste Spikes **(41)** ausgebildet sind, und mit einem zwischen den beiden seitlichen Erstreckungsabschnitten (22, 26) ausgebildeten axial mittleren Erstreckungsabschnitt (23, 24, 25) des Laufstreifenprofils, in welchem ausschließlich zweite Spikes (1) ausgebildet sind, wobei die Spikespitze der zweiten Spikes (1) mit dem Konturverlauf ihrer Griffkante (7) symmetrisch zu einer Achse ausgebildet ist, welche unter Einschluss eines Winkels β zur Umfangsrichtung U mit 0°≤ β ≤20° ausgerichtet ist, wobei die Spikespitze der ersten Spikes (41) mit dem Konturverlauf ihrer Griffkante (47) symmetrisch zu einer ersten Achse (m) ausgebildet ist, welche unter Einschluss eines Winkels α zur axialen Richtung A mit 0°≤ α ≤35° ausgerichtet ist, wobei der Konturverlauf der Griffkante (47) der ersten Spikes (41) eine andere Form als der Konturverlauf der Griffkante (7) der zweiten Spikes (1) aufweist, und
**dadurch gekennzeichnet, dass** die Spikespitze der ersten Spikes (41) mit dem Konturverlauf ihrer Griffkante (47) jeweils asymmetrisch zu den Ebenen ausgebildet ist, welche senkrecht zu ihrer ersten Achse (m) stehen, wobei die Länge (f) der in axialer Richtung gebildeten Projektion der Griffkante (47) der ersten Spikes (41) jeweils größer ist als die Länge (e) der in axialer Richtung A gebildeten Projektion der Griffkante (7) der zweiten Spikes (1).

2. Fahrzeugreifen gemäß den Merkmalen von Anspruch 1,
wobei die senkrecht zur ersten Achse (m) der Griffkante (47) des ersten Spikes (41) gemessene Breite der vom Konturverlauf der Griffkante (47) umschlossenen Fläche längs der Erstreckung der ersten Achse (m) zu der vom mittleren Erstreckungsabschnitt des Laufstreifenprofils wegweisenden Seite hin - insbesondere stetig - zunimmt.

3. Fahrzeugreifen gemäß den Merkmalen von Anspruch 1 oder 2,
wobei der Konturverlauf der Griffkante (47) der ersten Spikes (41) beiderseits der ersten Achse (m) jeweils einen geradlinigen Erstreckungsabschnitt (48, 49) aufweist, wobei die geradlinigen Erstreckungsabschnitte (48, 49) sich zumindest in ihrer Verlängerung auf der zum mittleren Erstreckungsabschnitt des Laufstreifenprofils hinweisenden Seite der Griffkante (47) in der ersten Achse (m) schneiden und von diesem Schnittpunkt ausgehend längs der Erstreckung der ersten Achse (m) zu der vom mittleren Erstreckungsabschnitt des Laufstreifenprofils wegweisenden Seite hin bis zu ihrem Erstreckungsende unter Einschluss eines Winkels V-förmig verlaufen, wobei die beiden Erstreckungsenden durch einen im Wesentlichen senkrecht zur ersten Achse (m) erstreckten dritten Erstreckungsabschnitt (50) der Griffkante (47) mit einander verbunden sind.

4. Fahrzeugreifen gemäß den Merkmalen von Anspruch 3,
wobei der dritte Erstreckungsabschnitt (50) geradlinig oder konkav gekrümmt erstreckt ausgebildet ist.

5. Fahrzeugreifen gemäß den Merkmalen von einem oder mehreren der vorangegangenen Ansprüche,
wobei die ersten und/oder die zweiten Spikes (1,41) jeweils aus einem Spikekörper (2, 42) und einem Spikepin (3, 43) bestehen, bei dem im Spikepin (3, 43) die Spikespitze und bei dem der Spikekörper (2, 42) aus einem Fußflansch (4, 44), einem Mittenabschnitt (5, 45) und einem Oberflansch (6, 46) ausgebildet ist.

6. Fahrzeugreifen gemäß den Merkmalen von Anspruch 5,
wobei der Fußflansch (44) der ersten Spikes (41) jeweils in den senkrecht zur Längserstreckungsrichtung des ersten Spikes (41) ausgebildeten Schnittebenen mit einer kreissegmentförmigen, mit einer ovalsegmentförmigen oder mit einer ellipsensegmentförmigen Schnittkontur (52) ausgebildet ist, deren Segmentenden mit einem geradlinig erstreckten Abschnitt (53) verbunden sind, wobei dieser geradlinige Abschnitt senkrecht zu einer Symmetrieachse n der Kreisform bzw. senkrecht zur längeren Symmetrieachse der Ovals bzw. der Ellipse ausgerichtet ist, und wobei diese Symmetrieachse unter Einschluss eines Winkels γ mit 0°≤γ≤45° zur axialen Richtung A des Reifens ausgerichtet ist.

7. Fahrzeugreifen gemäß den Merkmalen von Anspruch 5,
wobei der Oberflansch (6, 46) und der Mittenabschnitt (5, 45) in den senkrecht zur Längserstreckungsrichtung des ersten und/oder zweiten Spikes (1, 41) ausgebildeten Schnittebenen jeweils mit runder, ovaler oder elliptischer Schnittkontur ausgebildet sind.

8. Fahrzeugreifen gemäß den Merkmalen von einem oder mehreren der vorangegangenen Ansprüche,
wobei der Konturverlauf der umlaufenden Griffkante (7) der zweiten Spikes (1) in einer Drehrichtung D - insbesondere bei Vorwärtsfahrt - vorgeordnete (8) und eine in Drehrichtung D nachgeordneten Griffkante (9) bildet, wobei die vorgeordnete Griffkante (8) mit in Drehrichtung D zwei spitz aufeinander zulaufenden, geradlinig erstreckten Griffkantenabschnitten (10, 12) ausgebildet ist, wobei zwischen den beiden spitz zu laufenden Griffkantenabschnitten (10, 12) ein mittlerer, geradlinig erstreckter Griffkantenabschnitt (11) ausgebildet, wobei das in Drehrichtung D vorgeordnete Erstreckungsende des einen (10) der beiden spitz aufeinander zulaufenden Griffkantenabschnitte (10, 12) unter Bildung einer Knickstelle in das eine Erstreckungsende des mittleren Griffkantenabschnitts (11) übergeht und wobei das in D Drehrichtung vorgeordnete Erstreckungsende des anderen (12) der beiden spitz aufeinander zulaufenden Griffkantenabschnitte (10, 12) unter Bildung einer Knickstelle in das andere Erstreckungsende des mittleren Griffkantenabschnitts (11) übergeht.

9. Fahrzeugreifen gemäß den Merkmalen von Anspruch 8,
wobei die in der Drehrichtung D nachgeordnete Griffkante (9) des zweiten Spikes (1) mit zwei entgegen der Drehrichtung D spitz aufeinander zulaufenden, geradlinig erstreckten Griffkantenabschnitten (13, 15) und mit einem zwischen den beiden spitz aufeinander zulaufenden Griffkantenabschnitten (13, 15) ausgebildeten mittleren, konkav gekrümmten Griffkantenabschnitt (14) ausgebildet, wobei das in Drehrichtung D nachgeordnete Erstreckungsende des einen (13) der beiden spitz aufeinander zulaufenden Griffkantenabschnitte (13, 15) unter Bildung einer Knickstelle in das eine Erstreckungsende des mittleren Griffkantenabschnitts (14) übergeht und wobei das in Drehrichtung D nachgeordnete Erstreckungsende des anderen (15) der beiden spitz aufeinander zulaufenden Griffkantenabschnitte (13, 15) unter Bildung einer Knickstelle in das andere Erstreckungsende des mittleren Griffkantenabschnitts (14) übergeht.

10. Fahrzeugreifen gemäß den Merkmalen von einem oder mehreren der vorangegangenen Ansprüche,
wobei die umlaufenden Griffkante (7) des zweiten Spikes (1) in axialer Richtung A zu beiden Seiten hin jeweils eine seitliche Griffkante bildet, wobei die seitliche Griffkante jeweils einen Erstreckungsabschnitt (16, 17) aufweist, in welchem die Griffkante (7) geradlinig in Umgangsrichtung U des Reifens erstreckt ausgerichtet ist.

11. Fahrzeugreifen gemäß den Merkmalen von einem oder mehreren der Ansprüche 5 bis 10,
wobei der Fuß flansch (4) der zweiten Spikes (1) jeweils in den senkrecht zur Längserstreckungsrichtung des zweiten Spikes (1) ausgebildeten Schnittebenen mit einer kreissegmentförmigen, mit einer ovalsegmentförmigen oder mit einer ellipsensegmentförmigen Schnittkontur (12) ausgebildet ist, deren Segmentenden mit einem geradlinig erstreckten Abschnitt (13) verbunden sind, wobei dieser geradlinige Abschnitt (13) senkrecht zu einer Symmetrieachse der Kreisform bzw. senkrecht zur längeren Symmetrieachse der Ovals bzw. der Ellipse ausgerichtet ist, und wobei diese Symmetrieachse in Umfangsrichtung U des Reifens ausgerichtet ist.

12. Fahrzeugreifen gemäß den Merkmalen von einem oder mehreren der vorangegangenen Ansprüche,
wobei zwischen dem axial mittleren Erstreckungsabschnitt des Laufstreifenprofils und wenigstens einem axial seitlichen Erstreckungsabschnitt des Laufstreifenprofils eine axialer Zwischenabschnitt des Laufstreifenprofils ausgebildet ist, in welchem über den Umfang des Reifens verteilt sowohl erste Spikes (41) als auch zweite Spikes (1) ausgebildet sind.

## Claims

1. Vehicle tire having a tread profile and spikes (1, 41) which are formed with a spike tip with an encircling grip edge (7, 47), having two axially lateral extent portions (22, 26) of the tread profile, in which in each case only first spikes (41) are formed, and having an axially middle extent portion (23, 24, 25) of the tread profile which is formed between the two lateral extent portions (22, 26) and in which only second spikes (1) are formed, wherein the spike tip of the second spikes (1) is, with the contour profile of its grip edge (7), formed symmetrically with respect to an axis which is oriented so as to enclose an angle β with the circumferential direction U, where 0°≤ β ≤20°, wherein the spike tip of the first spikes (41) is, with the contour profile of its grip edge (47), formed symmetrically with respect to a first axis (m) which is oriented so as to enclose an angle α with the axial direction A, where 0°≤ α ≤35°, wherein
the contour profile of the grip edge (47) of the first spikes (41) has a different form than the contour profile of the grip edge (7) of the second spikes (1), and
**characterized**
**in that** the spike tip of the first spikes (41) is, with the contour profile of its grip edge (47), formed in each case asymmetrically with respect to the planes which are perpendicular to its first axis (m), wherein the length (f) of the projection, formed in the axial direction, of the grip edge (47) of the first spikes (41) is in each case greater than the length (e) of the projection, formed in the axial direction A, of the grip edge (7) of the second spikes (1).

2. Vehicle tire as per the features of Claim 1,
wherein the width, measured perpendicular to the first axis (m) of the grip edge (47) of the first spike (41), of the surface enclosed by the contour profile of the grip edge (47) increases - in particular in continuous fashion - along the extent of the first axis (m) toward the side pointing away from the middle extent portion of the tread profile.

3. Vehicle tire as per the features of Claim 1 or 2,
wherein the contour profile of the grip edge (47) of the first spikes (41) has in each case one rectilinear extent portion (48, 49) to both sides of the first axis (m), wherein the rectilinear extent portions (48, 49) intersect, at least in their elongation on that side of the grip edge (47) which points toward the middle extent portion of the tread profile, in the first axis (m), and proceeding from said intersection point run in V-shaped fashion, enclosing an angle, along the extent of the first axis (m) toward the side pointing away from the middle extent portion of the tread profile as far as their extent end, wherein the two extent ends are connected to one another by a third extent portion (50), extending substantially perpendicular to the first axis (m), of the grip edge (47).

4. Vehicle tire as per the features of Claim 3,
wherein the third extent portion (50) is formed so as to extend in rectilinear or concavely curved fashion.

5. Vehicle tire as per the features of one or more of the preceding claims,
wherein the first and/or the second spikes (1, 41) are composed in each case of a spike body (2, 42) and a spike spin (3, 43), in which, in the spike pin (3, 43), the spike tip, and in which the spike body (2, 42) is formed from a foot flange (4, 44), a middle portion (5, 45) and a top flange (6, 46).

6. Vehicle tire as per the features of Claim 5,
wherein the foot flange (44) of the first spikes (41) is formed with a circular-segment-shaped, with an oval-segment-shaped or with an ellipse-segment-shaped section contour (52) in each case in the section planes formed perpendicular to the longitudinal extent direction of the first spike (41), the segment ends of which section contour are connected to a rectilinearly extending portion (53), wherein said rectilinear portion is oriented perpendicular to an axis of symmetry n of the circular shape or perpendicular to the relatively long axis of symmetry of the oval or of the ellipse, and wherein said axis of symmetry is oriented so as to enclose an angle γ, where 0°≤γ≤45°, with respect to the axial direction A of the tire.

7. Vehicle tire as per the features of Claim 5,
wherein the top flange (6, 46) and the middle portion (5, 45) are formed in each case with a circular, oval or elliptical section contour in the section planes formed perpendicular to the longitudinal extent direction of the first and/or second spike (1, 41).

8. Vehicle tire as per the features of one or more of the preceding claims,
wherein the contour profile of the encircling grip edge (7) of the second spikes (1) forms a grip edge (8) situated in front in a direction of rotation D - in particular during forward travel - and a grip edge (9) situated behind in the direction of rotation D, wherein the grip edge (8) situated in front is formed with, in the direction of rotation D, two rectilinearly extending grip edge portions (10, 12) converging on one another in tapering fashion, wherein a middle, rectilinearly extending grip edge portion (11) is formed between the two grip edge portions (10, 12) converging on one another in tapering fashion, wherein that extent end of one (10) of the two grip edge portions (10, 12) converging on one another in tapering fashion which is situated in front in the direction of rotation D transitions, with the formation of a bend, into one extent end of the middle grip edge portion (11), and wherein that extent end of the other (12) of the two grip edge portions (10, 12) converging on one another in tapering fashion which is situated in front in the direction of rotation D transitions, with the formation of a bend, into the other extent end of the middle grip edge portion (11).

9. Vehicle tire as per the features of Claim 8,
wherein that grip edge (9) of the second spike (1) which is situated behind in the direction of rotation D is formed with two rectilinearly extending grip edge portions (13, 15) converging on one another in tapering fashion counter to the direction of rotation D and with a middle, concavely curved grip edge portion (14) formed between the two grip edge portions (13, 15) converging on one another in tapering fashion, wherein that extent end of one (13) of the two grip edge portions (13, 15) converging on one another in tapering fashion which is situated behind in the direction of rotation D transitions, with the formation of a bend, into one extent end of the middle grip edge portion (14), and wherein that extent end of the other (15) of the two grip edge portions (13, 15) converging on one another in tapering fashion which is situated behind in the direction of rotation D transitions, with the formation of a bend, into the other extent end of the middle grip edge portion (14).

10. Vehicle tire as per the features of one or more of the preceding claims,
wherein the encircling grip edge (7) of the second spike (1) forms in each case one lateral grip edge to both sides in the axial direction A, wherein the lateral grip edge has in each case one extent portion (16, 17) in which the grip edge (7) is oriented so as to extend rectilinearly in the circumferential direction U of the tire.

11. Vehicle tire as per the features of one or more of Claims 5 to 10,
wherein the foot flange (4) of the second spikes (1) is formed with a circular-segment-shaped, with an oval-segment-shaped or with an ellipse-segment-shaped section contour (12) in each case in the section planes formed perpendicular to the longitudinal extent direction of the second spike (1), the segment ends of which section contour are connected to a rectilinearly extending portion (13), wherein said rectilinear portion (13) is oriented perpendicular to an axis of symmetry of the circular shape or perpendicular to the relatively long axis of symmetry of the oval or of the ellipse, and wherein said axis of symmetry is oriented in the circumferential direction U of the tire.

12. Vehicle tire as per the features of one or more of the preceding claims,
wherein, between the axially middle extent portion of the tread profile and at least one axially lateral extent portion of the tread profile, there is formed an axial intermediate portion of the tread profile, in which both first spikes (41) and second spikes (1) are formed so as to be distributed over the circumference of the tire.

## Revendications

1. Pneumatique de véhicule comprenant un profil de bande de roulement et des clous (1, 41) qui sont réalisés avec une pointe de clou avec une arête d'accroche périphérique (7, 47), avec deux portions d'étendue axialement latérales (22, 26) du profil de bande de roulement, dans lesquelles sont réalisés à chaque fois exclusivement des premiers clous (41), et avec une portion d'étendue axialement centrale (23, 24, 25) réalisée entre les deux portions d'étendue latérales (22, 26) du profil de bande de roulement, dans laquelle sont réalisés exclusivement des deuxièmes clous (1), et la pointe de clou des deuxièmes clous (1) avec l'allure de contour de son arête d'accroche (7) étant réalisée symétriquement par rapport à un axe qui est orienté en formant un angle β par rapport à la direction périphérique U avec 0° ≤ β ≤ 20°, la pointe de clou des premiers clous (41) avec l'allure de contour de son arête d'accrochage (47) étant réalisée symétriquement par rapport à un premier axe (m) qui est orienté en formant un angle α par rapport à la direction axiale A avec 0° ≤ α ≤ 35°,
l'allure de contour de l'arête d'accroche (47) des premiers clous (41) présentant une forme différente de l'allure de contour de l'arête d'accroche (7) des deuxièmes clous (1), et
**caractérisé en ce que** la pointe de clou des premiers clous (41) avec l'allure de contour de son arête d'accroche (47) est réalisée à chaque fois de manière asymétrique par rapport aux plans qui s'étendent perpendiculairement à son premier axe (m), la longueur (f) de la projection dans la direction axiale de l'arête d'accroche (47) des premiers clous (41) étant à chaque fois supérieure à la longueur (e) de la projection dans la direction axiale A de l'arête d'accroche (7) des deuxièmes clous (1).

2. Pneumatique de véhicule selon les caractéristiques de la revendication 1, dans lequel la largeur de la surface entourée par l'allure du contour de l'arête d'accroche (47), mesurée perpendiculairement au premier axe (m) de l'arête d'accroche (47) du premier clou (41), augmente, notamment de manière continue, le long de l'étendue du premier axe (m) jusqu'au côté opposé à la portion d'étendue centrale du profil de bande de roulement.

3. Pneumatique de véhicule selon les caractéristiques de la revendication 1 ou 2, dans lequel l'allure du contour de l'arête d'accroche (47) des premiers clous (41) présente à chaque fois une portion d'étendue rectiligne (48, 49) de part et d'autre du premier axe (m), les portions d'étendue rectiligne (48, 49) s'intersectant sur le premier axe (m) au moins dans leur prolongement du côté de l'arête d'accroche (47) tourné vers la portion d'étendue centrale du profil de bande de roulement et s'étendant en forme de V en formant un angle à partir de ce point d'intersection le long de l'étendue du premier axe (m) vers le côté opposé à la portion d'étendue centrale du profil de bande de roulement jusqu'à leur extrémité d'étendue, les deux extrémités d'étendue étant connectées l'une à l'autre par une troisième portion d'étendue (50) de l'arête d'accroche (47) s'étendant essentiellement perpendiculairement au premier axe (m).

4. Pneumatique de véhicule selon les caractéristiques de la revendication 3, dans lequel la troisième portion d'étendue (50) est réalisée avec une étendue rectiligne ou de courbure concave.

5. Pneumatique de véhicule selon les caractéristiques d'une ou plusieurs des revendications précédentes,
dans lequel les premiers et/ou les deuxièmes clous (1, 41) se composent à chaque fois d'un corps de clou (2, 42) et d'une broche de clou (3, 43), la pointe de clou étant réalisée dans la broche de clou (3, 43) et le corps de clou (2, 42) étant réalisé à partir d'une bride de base (4, 44), d'une portion centrale (5, 45) et d'une bride supérieure (6, 46).

6. Pneumatique de véhicule selon les caractéristiques de la revendication 5,
dans lequel la bride de base (44) des premiers clous (41) est réalisée à chaque fois dans les plans de coupe formés perpendiculairement à la direction d'étendue longitudinale du premier clou (41) avec un contour en coupe (52) en forme de segment de cercle, en forme de segment ovale ou elliptique, dont les extrémités de segment sont connectées à une portion s'étendant sous forme rectiligne (53), cette portion rectiligne étant orientée perpendiculairement à un axe de symétrie n de la forme circulaire ou perpendiculairement à l'axe de symétrie plus long de l'ovale ou de l'ellipse, et cet axe de symétrie étant orienté en formant un angle γ avec 0° ≤ γ ≤ 45° par rapport à la direction axiale A du pneu.

7. Pneumatique de véhicule selon les caractéristiques de la revendication 5,
dans lequel la bride supérieure (6, 46) et la portion centrale (5, 45) sont réalisées dans les plans de coupe formés perpendiculairement à la direction d'étendue longitudinale du premier et/ou du deuxième clou (1, 41) à chaque fois avec un contour en coupe circulaire, ovale ou elliptique.

8. Pneumatique de véhicule selon les caractéristiques d'une ou plusieurs des revendications précédentes,
dans lequel l'allure du contour de l'arête d'accroche périphérique (7) des deuxièmes clous (1) forme, dans un sens de rotation D - notamment en marche avant - une arête d'accroche avant (8) et une arête d'accroche arrière (9) dans le sens de rotation D, l'arête d'accroche avant (8) étant réalisée avec deux portions d'arête d'accroche s'étendant sous forme rectiligne (10, 12), convergeant en pointe l'une vers l'autre dans le sens de rotation D, entre les deux portions d'arête d'accroche convergeant en pointe (10, 12) étant réalisée une portion d'arête d'accroche centrale s'étendant sous forme rectiligne (11), l'extrémité d'étendue, avant dans le sens de rotation D, de l'une (10) des deux portions d'arête d'accroche (10, 12) convergeant en pointe l'une vers l'autre se prolongeant en formant un point d'inflexion dans l'une des extrémités d'étendue de la portion d'arête d'accroche centrale (11) et l'extrémité d'étendue avant, dans le sens de rotation D, de l'autre (12) des deux portions d'arête d'accroche (10, 12) convergeant en pointe l'une vers l'autre se prolongeant en formant un point d'inflexion dans l'autre extrémité d'étendue de la portion d'arête d'accroche centrale (11).

9. Pneumatique de véhicule selon les caractéristiques de la revendication 8,
dans lequel l'arête d'accroche arrière (9), dans le sens de rotation D, du deuxième clou (1) est réalisée avec deux portions d'arête d'accroche s'étendant sous forme rectiligne (13, 15), convergeant en pointe l'une vers l'autre, dans le sens opposé au sens de rotation D et avec une portion d'arête d'accroche centrale de courbure concave (14) réalisée entre les deux portions d'arête d'accroche (13, 15) convergeant en pointe l'une vers l'autre, l'extrémité d'étendue arrière dans le sens de rotation D, de l'une (13) des deux portions d'arête d'accroche (13, 15) convergeant en pointe l'une vers l'autre se prolongeant en formant un point d'inflexion dans l'une des extrémités d'étendue de la portion d'arête d'accroche centrale (14) et l'extrémité d'étendue arrière dans le sens de rotation (D), de l'autre (15) des deux portions d'arête d'accroche (13, 15) convergeant en pointe l'une vers l'autre se prolongeant en formant un point d'inflexion dans l'autre extrémité d'étendue de la portion d'arête d'accroche centrale (14).

10. Pneumatique de véhicule selon les caractéristiques d'une ou plusieurs des revendications précédentes,
dans lequel l'arête d'accroche périphérique (7) du deuxième clou (1) forme, dans la direction axiale A vers les deux côtés, à chaque fois une arête d'accroche latérale, l'arête d'accroche latérale présentant à chaque fois une portion d'étendue (16, 17) dans laquelle l'arête d'accroche (7) est orientée de manière à s'étendre en ligne droite dans la direction périphérique U du pneumatique.

11. Pneumatique de véhicule selon les caractéristiques d'une ou plusieurs des revendications 5 à 10, dans lequel la bride de base (4) des deuxièmes clous (1) est réalisée à chaque fois dans les plans de coupe formés perpendiculairement à la direction d'étendue longitudinale du deuxième clou (1) avec un contour en coupe (12) en forme de segment de cercle, en forme de segment d'ovale ou en forme de segment d'ellipse, dont les extrémités de segment sont connectées à une portion s'étendant sous forme rectiligne (13), cette portion rectiligne (13) étant orientée perpendiculairement à un axe de symétrie de la forme circulaire ou perpendiculairement à l'axe de symétrie plus long de l'ovale ou de l'ellipse, et cet axe de symétrie étant orienté dans la direction périphérique U du pneu.

12. Pneumatique de véhicule selon les caractéristiques d'une ou plusieurs des revendications précédentes,
dans lequel une portion intermédiaire axiale du profil de bande de roulement est réalisée entre la portion d'étendue axialement centrale du profil de bande de roulement et au moins une portion d'étendue axialement latérale du profil de bande de roulement, dans laquelle portion intermédiaire axiale sont réalisés, de manière répartie sur la périphérie du pneu, à la fois des premiers clous (41) et des deuxièmes clous (1).
